# EUROPÄISCHE PATENTSCHRIFT

(11) **EP 2 759 703 B1**
(45) Veröffentlichungstag und Bekanntmachung des Hinweises auf die Patenterteilung: **06.12.2017**
(21) Anmeldenummer: 14151820.9
(22) Anmeldetag: 20.01.2014
(51) Int. Cl.: F04B 7/00, F04B 15/02, F04B 53/10, F16K 31/20, F16K 31/24, F16K 33/00

(54) **Pumpenventil**
Pump valve
Clapet de pompe

(30) Priorität: 28.01.2013 DE 102013100794
(43) Veröffentlichungstag der Anmeldung: 30.07.2014
(73) Patentinhaber: Feluwa Pumpen GmbH, 54570 Mürlenbach (DE)
(72) Erfinder: Nägel, Daniel, 54550 Daun (DE)
(74) Vertreter: Vièl, Christof

(56) Entgegenhaltungen:
- DE-A1- 19 716 980
- US-A- 214 463
- US-A- 2 886 056
- US-A- 4 014 629
- US-A1- 2007 240 767

## Beschreibung

Die Erfindung betrifft ein Pumpenventil, insbesondere zur Förderung abrasiver und/oder heterogener Mischungen.

Als Saug- und Druckventile werden in oszillierenden Verdrängerpumpen nahezu ausnahmslos druckgesteuerte Ventile verwendet. Sie öffnen und schließen bei Einfluß durch die Gewichtskraft der Ventilschließkörper, die ggf. vorhandenen Federkräfte und den effektiv anliegenden Differenzdruck des umgebenden Strömungsfeldes. Sie gehören damit prinzipiell zur Gruppe der Rückschlagventile. Solche Ventile sind zweifellos die in einer oszillierenden Pumpe am stärksten beanspruchten Baugruppen und spielen daher hinsichtlich der sicheren Pumpenfunktion eine Schlüsselrolle, denn sie müssen über große Betriebszeiträume zuverlässig und präzise schließen, verschleißarm arbeiten und einen möglichst geringen Druckverlust erzeugen. Entscheidend für die sichere Funktion ist, dass der sich ständig wiederholende Schließvorgang selbst bei hohen Differenzdrücken mit einer sicheren Abdichtwirkung abschließt und ohne bzw. nur mit geringer Kavitation im Bereich der Dichtfläche öffnet.

Beispielsweise sind Kugelventile zur Verhinderung des Kraftstoffaustritts bei Automobilen aus der US 5 927 315 A bekannt. Die US 2 223 509 A offenbart eine Schwimmerventilanordnung zur Verwendung in einem Bohrgestänge. Eine automatische Befüllungsstopvorrichtung für Kryogenbehälter, die einen Schwimmkörper beinhaltet, ist in der US 2010 / 0 288 774 A1 offenbart. Traditionell kommen bei Pumpen für feststoffhaltige (agressive, toxische und explosive) Medien Kugel- oder Kegelventile zum Einsatz. Eine solche Pumpe mit einem Kugelventil ist beispielsweise aus der GB 2 161 221 A bekannt. Die DE 31 21 103 C2 beschreibt eine Membranpumpe, ausgebildet als hydraulisch betätigte Verdrängerpumpe, insbesondere zum Pumpen eines dickflüssigen und abrasiven oder mit Festkörpern beladenen sekundären fließfähigen Mediums. Die US 4 014 629 A beschreibt ein serverunterstütztes Pumpenventil, wobei insbesondere bei viskosen Medien eine Kraftverstärkung bei der Hubbewegung der Ventile im Upflow-Betrieb ausgeübt wird.

Für heterogene Mischungen ist eine sogenannte Downflow-Technologie bekannt, d.h. Pumpen mit umgekehrter Förderrichtung und hierfür maßgeschneiderten Ventilen (Heinz M. Nägel, Hermetisch dichte Verdrängerpumpen, ISBN 978-3-00-030685-3, Seiten 60 bis 62).

Frei fallende Kugelventile mit Schwimmkugel (Heinz M. Nägel, aao, Seite 61) eignen sich insbesondere zur Förderung von heterogenen Mischungen und/oder feststoffbeladenen Förderfluiden. Diese Schwimmkugelventile werden vor folgendem Hintergrund eingesetzt: Wenn bei einer Förderung durch die Pumpe von unten nach oben die Sinkgeschwindigkeit der geförderten Feststoffpartikel fast gleich oder sogar großer ist als die mittlere Transportgeschwindigkeit, ist die Feststoffförderung nicht mehr möglich. SchwimmkugelVentile sind jedoch festigkeitsmäßig bei Drücken ≥ 20bar(ü) begrenzt durch den Differenzdruck zwischen dem Druck im Pumpeninnenraum zum Außendruck an der Pumpen-Zulaufseite (Druckphase).

Des Weiteren liegt eine Begrenzung vor vom Vakuum im Pumpeninnenraum zum Außendruck an der Pumpen-Druckseite (Saugphase).

Für höhere Betriebsdrücke (größer 35 bar) und große Nennwerte können federbelastete Kugel- oder Kegelventile verwendet werden (Heinz M. Nägel, aao, Seiten 56 und 62). Kegelkörper und Kugelventile mit Federunterstützung arbeiten mit Druckfedern. Druckfedern erreichen nur teilweise den Dauerfestigkeitsbereich der jeweils materialspezifischen Wöhlerkurve, bedingt durch die Abrasivitätseinflüsse der Partikel und die eventuellen Korrosionseinflüsse des Trägerfluids. Der Nachteil dieser Konstruktion besteht einerseits in dem komplexen Aufbau und andererseits in der mangelnden Dauerwechselfestigkeit der verwendeten Federn, insbesondere im Zusammenhang mit der Förderung von aggressiven Förderfluiden.

Bei einer erfolgten Umkehrung der Förderrichtung (Förderung von oben nach unten) muß dieser physikalischen Beschränkung keine Rechnung mehr getragen werden. Hier kommen Schwimmkugelventile, Kugelventile mit Federunterstützung und Kegelkörper mit Federunterstützung zum Einsatz.

Ein weiterer Nachteil der Kegelventile, insbesondere im Zusammenhang mit der Förderung von feststoffhaltigen Medien (Suspensionen), liegt in der Federkennlinie und der Gefahr, daß sich Partikel in der oberen und/oder unteren Ventilführung absetzen bzw. zu einem hohen Verschleiß führen und/oder sogar das Ventil blockieren.

Zugleich ist die wirtschaftliche Machbarkeit von dichtschließenden Hohlventilkugeln aus fertigungstechnischer Sicht und der hieraus resultierenden wirtschaftlichen Wertigkeit in der Größe begrenzt. Jedoch besteht weltweit ein Trend zu größeren Fördermengen und dementsprechend größeren Ventilen und größeren Betriebsdrücken.

Der Erfindung liegt somit die Aufgabe zugrunde, ein neuartiges Pumpenventil zu schaffen, das den wachsenden Anforderungen gerecht wird.

Diese Aufgabe wird für ein Pumpenventil im Downflow-Betrieb dadurch gelöst, daß ein zweigeteiltes Ventilgehäuse vorgesehen ist, wobei das Ventilgehäuse aus einem unteren Teil und einem oberen Teil gebildet ist, wobei in dem unteren Teil des Ventilgehäuses ein zumindest teilsphärischer Schließkörper vorgesehen ist und in dem oberen Teil des Ventilgehäuses ein Schwimmkörper angeordnet ist, der mit dem Schließkörper über eine Verbindungsstange verbunden ist, wobei zwischen dem Schließkörper und dem Schwimmkörper ein Ventilsitz angeordnet ist. Hierbei ist vorgesehen, dass der Ventilsitz doppelseitig verwendbar ist.

Eine Ausgestaltung der Erfindung besteht darin, daß der Schwimmkörper als im oberen Teil des Ventilgehäuses angeordnete Schwimmkugel ausgebildet ist.

Es wird im Rahmen der Erfindung vorgeschlagen, die abdichtende Kugel oder den abdichtenden Kegel durch ein Kugelsegment zu ersetzen. Die Schwimmkugel soll als reiner Auftriebskörper genutzt werden, weil diese den höchstmöglichen Auftrieb bei gleichzeitig geringster Masse und höchster Festigkeit bietet. Diese Schwimmkugel wird mit dem Schließkörper mittels einer Verbindungsstange verbunden.

Da die Schwimmkugel frei im Fördermedium schwebt, ohne gegen eine Druckdifferenz abdichten zu müssen, kann sie als reine Kugel berechnet werden mit allseitig in etwa gleichem vorhandenem Druck.

Es wird somit ein vom Differenzdruck unabhängiges Schwimmkugelsystem für den Downflow-Betrieb geschaffen, das die geschilderten Nachteile der vorher aufgezeigten Pumpenventile für die Förderung von oben nach unten sicher verhindert.

Die Aufgabe wird ebenfalls für ein Pumpenventil im Upflow-Betrieb dadurch gelöst, daß ein zweigeteiltes Ventilgehäuse vorgesehen ist, wobei das Ventilgehäuse aus einem unteren Teil und einem oberen Teil gebildet ist, wobei in dem unteren Teil des Ventilgehäuses ein Schwimmkörper vorgesehen ist und in dem oberen Teil des Ventilgehäuses ein zumindest teilsphärischer Schließkörper angeordnet ist, der mit dem Schwimmkörper über eine Verbindungsstange verbunden ist, wobei zwischen dem Schließkörper und dem Schwimmkörper ein Ventilsitz angeordnet ist. Hierbei ist vorgesehen, dass der Ventilsitz doppelseitig verwendbar ist.

Hierbei besteht eine andere Ausgestaltung der Erfindung darin, daß der Schwimmkörper als im unteren Teil des Ventilgehäuses angeordneter im Wesentlichen zylindrischer Körper ausgebildet ist.

Bei dieser für den Upflow-Betrieb geschaffenen Lösung übernimmt der Schließkörper mit gleichbleibender Kraft die Schließfunktion, was einer idealen Kennlinie entspricht, während bei herkömmlichen Kegelventil-Konstruktionen die Schließkraft durch Schraubendruckfedern mit zum Teil nachteiliger Kennlinie aufgebracht wird. Zumal ist der Aufbau einfacher und die Ventilführung des Schließkörpers und der Ventilinnengarnitur ist auch für verunreinigte Medien geeignet.

Bei beiden Ausgestaltungen werden die Vorteile der Kugelventile, nämlich die Robustheit, die geringe Zahl an Bauteilen und die Eignung für stark verunreinigte Medien, mit dem Vorteil der Kegelventile, nämlich der Möglichkeit, größere Nennweiten fertigen zu können, vereint. Zudem ist die erfindungsgemäße Lösung auch insofern vorteilhaft, als der Schließkörper die Ventilführung nur linear berührt und demzufolge weitestgehend sichergestellt ist, daß sich kein Fremdkörper zwischen dem Schließkörper und der Ventilführung positionieren kann.

Nachfolgend werden Ausführungsbeispiele der Erfindung anhand von Zeichnungen näher erläutert.

Es zeigen
- Fig. 1: eine komplette Pumpe mit Getriebe mit einem darin eingebauten erfindungsgemäßen Downflow-Pumpenventil gemäß den Fig. 2 bis 5,
- Fig. 2 bis 5: Ausgestaltungen der erfindungsgemäßen Downflow-Pumpenventile,
- Fig. 6 bis 8: Ausgestaltungen der erfindungsgemäßen Upflow-Pumpenventile.

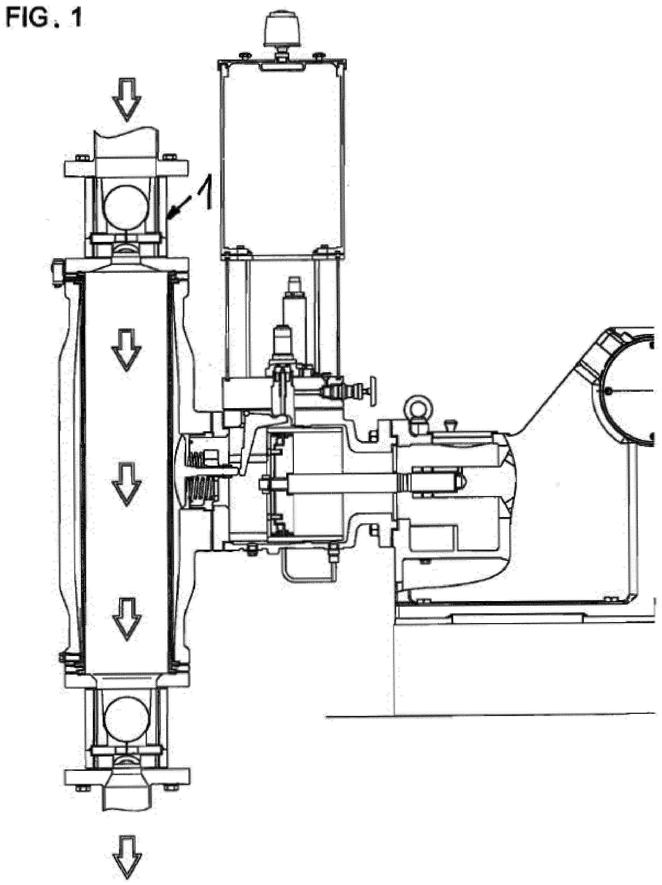

Fig. 1 zeigt eine komplette Pumpe mit Getriebe sowie einem darin eingebauten erfindungsgemäßen Downflow-Pumpenventil (D-V).

Die erfindungsgemäßen Downflow-Pumpenventile sind, wie aus den Fig. 1, 2, 3, 4 und 5 ersichtlich aufgebaut.

In den oberen Teil 1 des Ventilgehäuses, der mit Führungsrippen 2 versehen ist, wird der als Schwimmkugel 3 ausgebildete Schwimmkörper 3 mit der Verbindungsstange 5 nach unten gerichtet eingelegt. Als gemeinsame Zentrierung vom oberen Teil 1 des Ventilgehäuses zum unteren Teil 7 des Ventilgehäuses, das Führungsrippen 8 aufweist, dient der hier dargestellte doppelseitig verwendbare Ventilsitz 4. Die Führungsrippen 2 und 8 sind auswechselbar.

Die Schwimmkugel 3 ist vorzugsweise als Hohlkugel ausgebildet. Ihre Auftriebskraft dient als Schließkraft für das Pumpenventil. Die Hohlkugel wird bei dieser Konstruktion rundum gleichmäßig mit Druck beaufschlagt. Daraus resultiert, daß die Wandstärke auf Grundlage des vorliegenden Außendrucks, basierend auf der Beul-Druckformel (pk = 0,365 * E * h² / R²) berechnet wird. Bei einem Kugeldurchmesser von 137 mm und einem Betriebsdruck von 50 bar ergibt sich demzufolge eine Mindestwandstärke von 0,57 mm.

Der obere Teil 1 und der untere Teil 7 des Ventilgehäuses werden zusammengebaut oder mittels Ankerschrauben im Sinne einer Kassettenverbindung zusammengebaut. Die Verbindungsstange 5, die an dem teilsphärisch ausgebildeten Schließkörper 6 befestigt ist, wird von unten in dem Schwimmkörper 3 befestigt und mit einer Sicherung versehen. Der Schließkörper 6 besteht aus verschleißfestem Stahl oder anderen verschleißfesten Werkstoffen, wie Oxydkeramik.

Das erfindungsgemäße Pumpenventil ist zweifach geführt, oben durch den Schwimmkörper 3, unten durch den zumindest teilsphärisch ausgebildeten Schließkörper 6, der mit einer Ventilkugel vergleichbar ist. Beide Führungen sind unempfindlich gegenüber Verunreinigungen.

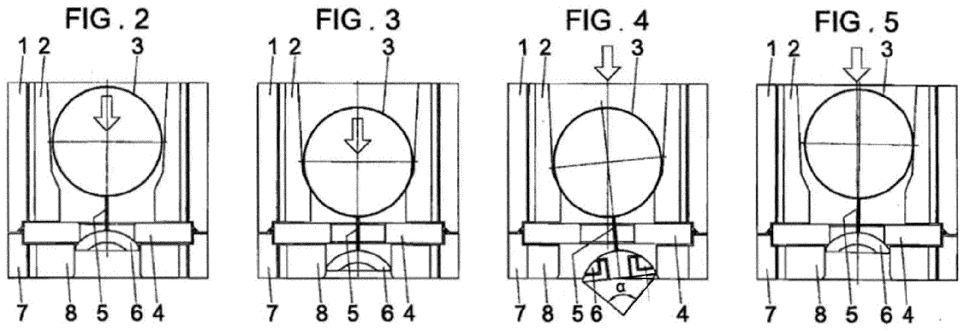

In Fig. 2 wird zusätzlich vorgeschlagen, die Führungsrippen 2 und 8 konisch auszuführen, um eine Selbsthemmung des Schwimmkörpers 3 oder des Schließkörpers 6 (Innengarnitur) durch Partikel zu verhindern.

In der weiteren Ausbildung der Erfindung, wie sie in den Fig. 2 bis 5 dargestellt ist, wird der Schwimmkörper als eine Kunststoff-Hohlkugel (z.B. aus PE-HD oder PP) ausgebildet, welche einen hohen Auftrieb mit sich bringt. Die Verbindungsstange 5 ist innen im Schwimmkörper verschraubt und gesichert.

Die Fig. 4 zeigt eine besondere Ausführung mit Segment-Wechselkalottensätzen am Schließkörper 6 sowie Freidrehungen im Bereich der Führungsrippen 2 und 8 für grob verunreinigte Medien. Die mögliche Auslenkbewegung, aufgrund der auch Fluide mit groben Verunreinigungen gefördert werden können, ist deutlich zu erkennen.

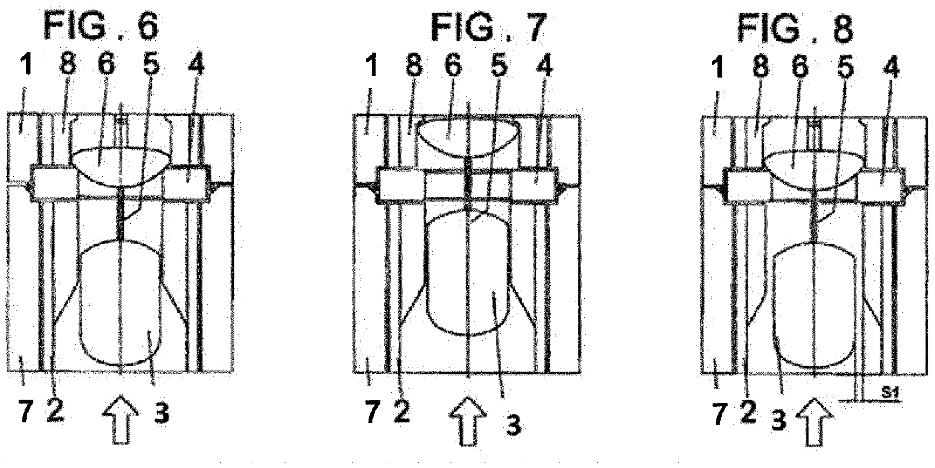

Die Fig. 6 bis 8 zeigen ein erfindungsgemäßes Upflow-Pumpenventil. Hier ist der Schwimmkörper 3 als im unteren Teil 7 des Ventilgehäuses angeordneter, im Wesentlichen zylindrischer Körper ausgebildet. Dieser Schwimmkörper 3 wird mit dem Schließkörper 6, welcher im oberen Teil 1 des Ventilgehäuses angeordnet ist, mittels einer Verbindungsstange 5 verbunden. Die übrigen Teile des Pumpenventils sind entsprechend wie bei der ersten Ausgestaltung der Erfindung ausgebildet.

## Patentansprüche

1. Pumpenventil zur Förderung abrasiver und/oder heterogener Mischungen, geeignet für den Downflow-Betrieb, wobei ein zweigeteiltes Ventilgehäuse (1, 7) vorgesehen ist, wobei das Ventilgehäuse aus einem unteren Teil (7) und einem oberen Teil (1) gebildet ist, **dadurch gekennzeichnet, daß** in dem unteren Teil (7) des Ventilgehäuses (1, 7) ein zumindest teilsphärischer Schließkörper (6) vorgesehen ist und in dem oberen Teil (1) des Ventilgehäuses (1, 7) ein Schwimmkörper (3) angeordnet ist, der mit dem Schließkörper (6) über eine Verbindungsstange (5) verbunden ist, wobei zwischen dem Schließkörper (6) und dem Schwimmkörper (3) ein Ventilsitz (4) angeordnet ist, wobei der Ventilsitz (4) doppelseitig verwendbar ist.

2. Pumpenventil gemäß Anspruch 1, **dadurch gekennzeichnet, daß** der Schwimmkörper (3) als im oberen Teil (1) des Ventilgehäuses (1, 7) angeordnete Schwimmkugel (3) ausgebildet ist.

3. Pumpenventil zur Förderung abrasiver und/oder heterogener Mischungen, geeignet für den Upflow-Betrieb, wobei ein zweigeteiltes Ventilgehäuse (1, 7) vorgesehen ist, wobei das Ventilgehäuse aus einem unteren Teil (7) und einem oberen Teil (1) gebildet ist, **dadurch gekennzeichnet, daß** in dem unteren Teil (7) des Ventilgehäuses (1, 7) ein Schwimmkörper (3) vorgesehen ist und in dem oberen Teil (1) des Ventilgehäuses (1, 7) ein zumindest teilsphärischer Schließkörper (6) angeordnet ist, der mit dem Schwimmkörper (3) über eine Verbindungsstange (5) verbunden ist, wobei zwischen dem Schließkörper (6) und dem Schwimmkörper (3) ein Ventilsitz (4) angeordnet ist, wobei der Ventilsitz (4) doppelseitig verwendbar ist.

4. Pumpenventil im Upflow-Betrieb gemäß Anspruch 3, **dadurch gekennzeichnet, daß** der Schwimmkörper (3) im Wesentlichen als zylindrischer Körper ausgebildet ist.

## Claims

1. Pump valve for the delivery of abrasive and/or heterogeneous mixtures, which is suitable for downflow operation, a two-part valve casing (1, 7) formed by a lower part (7) and an upper part (1) being provided, **characterised in that** an at least partially spherical closure member (6) is provided in the lower part (7) of the valve casing (1, 7) and a float (3), which is connected to the closure member (6) via a connecting rod (5), is disposed in the upper part (1) of the valve casing (1, 7), a double-sided usable valve seat (4) being disposed between the closure member (6) and the float (3).

2. Pump valve according to claim 1, **characterised in that** the float (3) is configured as a floating ball (3) disposed in the upper part (1) of the valve casing (1, 7).

3. Pump valve for the delivery of abrasive and/or heterogeneous mixtures, which is suitable for upflow operation, a two-part valve casing (1, 7) formed by a lower part (7) and an upper part (1) being provided, **characterised in that** a float (3) is provided in the lower part (7) of the valve casing (1, 7) and an at least partially spherical closure member (6), which is connected to the float (3) via a connecting rod (5), is disposed in the upper part (1) of the valve casing (1, 7), a double-sided usable valve seat (4) being disposed between the closure member (6) and the float (3).

4. Pump valve for upflow operation according to claim 3, **characterised in that** the float (3) is configured substantially as a cylindrical body.

## Revendications

1. Clapet de pompe pour la circulation de mélanges abrasifs et/ou hétérogènes, approprié pour une utilisation à courant descendant, un boîtier de clapet en deux pièces (1, 7) étant prévu, le boîtier de clapet étant formé d'une partie inférieure (7) et d'une partie supérieure (1), **caractérisé en ce qu'**un corps de fermeture (6) au moins partiellement sphérique est prévu dans la partie inférieure (7) du boîtier de clapet (1, 7) et un flotteur (3) est disposé dans la partie supérieure (1) du boîtier de clapet (1, 7), lequel flotteur est relié au corps de fermeture (6) par le biais d'une tige de liaison (5), un siège de clapet (4) étant disposé entre le corps de fermeture (6) et le flotteur (3), le siège de clapet (4) étant utilisable de deux côtés.

2. Clapet de pompe selon la revendication 1, **caractérisé en ce que** le flotteur (3) est conçu sous la forme d'une boule flottante (3) disposée dans la partie supérieure (1) du boîtier de clapet (1, 7).

3. Clapet de pompe pour la circulation de mélanges abrasifs et/ou hétérogènes, approprié pour une utilisation à courant ascendant, un boîtier de clapet en deux pièces (1, 7) étant prévu, le boîtier de clapet étant formé d'une partie inférieure (7) et d'une partie supérieure (1), **caractérisé en ce qu'**un flotteur (3) est prévu dans la partie inférieure (7) du boîtier de clapet (1, 7) et un corps de fermeture (6) au moins partiellement sphérique est disposé dans la partie supérieure (1) du boîtier de clapet (1, 7), lequel corps de fermeture est relié au flotteur (3) par le biais d'une tige de liaison (5), un siège de clapet (4) étant disposé entre le corps de fermeture (6) et le flotteur (3), le siège de clapet (4) étant utilisable de deux côtés.

4. Clapet de pompe en utilisation à courant ascendant selon la revendication 3, **caractérisé en ce que** le flotteur (3) est conçu essentiellement sous la forme d'un corps cylindrique.
